(19) Europäisches Patentamt / European Patent Office / Office européen des brevets

(11) **EP 4 106 176 A1**

(12) **EUROPÄISCHE PATENTANMELDUNG**

(43) Veröffentlichungstag:
**21.12.2022 Patentblatt 2022/51**

(51) Internationale Patentklassifikation (IPC):
**H02M 7/483** $^{(2007.01)}$   **H02M 1/12** $^{(2006.01)}$

(21) Anmeldenummer: **22179082.7**

(52) Gemeinsame Patentklassifikation (CPC):
**H02M 7/4837; H02M 7/4833;** H02M 1/12

(22) Anmeldetag: **15.06.2022**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **18.06.2021 AT 504952021**

(71) Anmelder: **B&R Industrial Automation GmbH**
**5142 Eggelsberg (AT)**

(72) Erfinder:
• **Höller, Florian**
 **5142 Eggelsberg (AT)**
• **Maislinger, Franz**
 **5142 Eggelsberg (AT)**
• **Wyss, Jonas**
 **5142 Eggelsberg (AT)**
• **Steinhauser, Armin**
 **5142 Eggelsberg (AT)**

(74) Vertreter: **Patentanwälte Pinter & Weiss OG**
**Prinz-Eugen-Straße 70**
**1040 Wien (AT)**

(54) **VERFAHREN ZUM BETRIEB EINES FLYING-CAPACITOR MULTILEVEL-UMRICHTERS**

(57) Um ein gegenüber dem Stand der Technik verbessertes Verfahren zum Betrieb eines Multilevel-Umrichters in Flycap-Topologie (1) anzugeben, bei dem zumindest zwei Halbleiterschalter innerhalb einer mit einer Ansteuerfrequenz $f_A$ wiederkehrenden Ansteuerperiode (AP) durch Ansteuerpulse variabler Pulsdauern $\tau_k$ angesteuert werden, um zur Erzeugung einer Ausgangsspannung ($u_{out}$) eine an einem Eingang (E) des Multilevel-Umrichters (1) angeschlossene Spannungsquelle (S), einen Ausgang (A) des Multilevel-Umrichters (1) und zumindest einen zwischen Eingang (E) und Ausgang (A) des Multilevel-Umrichters (1) angeordneten Hilfskondensator $C_j$ selektiv miteinander zu verbinden, wird unter Verwendung zumindest eines Schwingungsparameters, welcher das Schwingungsverhalten von zumindest einer Oberwelle einer elektrischen Messgröße (x) beschreibt, zumindest eine Korrekturpulsdauer $\tau_k^*$ für einen zukünftigen Ansteuerpuls zur Verkleinerung der Amplitude der zumindest einen Oberwelle ermittelt und zumindest ein Halbleiterschalter mit einem Ansteuerpuls der ermittelten Korrekturpulsdauer $\tau_k^*$ angesteuert.

Fig. 1

## Beschreibung

Die gegenständliche Erfindung betrifft ein Verfahren zum Betrieb eines Multilevel-Umrichters in Flycap-Topologie, bei dem zumindest zwei Halbleiterschalter innerhalb einer mit einer Ansteuerfrequenz wiederkehrenden Ansteuerperiode durch Ansteuerpulse variabler Pulsdauern angesteuert werden, um zur Erzeugung einer Ausgangsspannung des Multilevel-Umrichters eine an einem Eingang des Multilevel-Umrichters angeschlossene Spannungsquelle, einen Ausgang des Multilevel-Umrichters und zumindest einen zwischen Eingang und Ausgang des Multilevel-Umrichters angeordneten Hilfskondensator selektiv miteinander zu verbinden, wobei sich am zumindest einen Hilfskondensator eine Hilfsspannung ausbildet und wobei an einer mit dem Ausgang des Multilevel-Umrichters elektrisch verbundenen Stelle zumindest eine elektrische Spannung oder zumindest ein elektrischer Strom als elektrische Messgröße gemessen werden.

Stromrichter, wie Gleich-, Wechsel- und Umrichter, nehmen in den vielfältigsten technologischen Anwendungsgebieten zunehmend Schlüsselrollen ein. Die Netzeinspeisung von Solarenergie, die Hochspannungs-Gleichstrom-Übertragung oder auch die automotive Prüfstandstechnik sind diesbezüglich nur auszugsweise Beispiele, in denen Amplitude, Frequenz und Phase von Strömen und Spannungen unter Einhaltung hoher Genauigkeitsanforderungen mittels geeigneter Stromrichter an vorgegebene Sollwerte angepasst werden müssen. Obwohl das Feld der Stromrichtertechnik in diesem Zusammenhang ein seit längerer Zeit intensiv beforschtes Fachgebiet darstellt, führen insbesondere die Forderungen nach höherer Regelgenauigkeit bei gleichzeitig hohen zeitlichen Änderungsraten von umzusetzenden Sollgrößen, geringerer Restwelligkeit der erzeugten elektrischen Ausgangsgrößen, geringeren Baugrößen der eingesetzten Stromrichter und reduzierten Kosten fortlaufend zu neuen technologischen Herausforderungen.

Zur Erfüllung der genannten Forderungen stellen im Besonderen Multilevel-Umrichter einen vielversprechenden und vielbeachteten Ansatz dar. Multilevel-Umrichter sind in verschiedenen Ausführungen und Topologien bekannt. Ein Multilevel-Umrichter umfasst eine Schaltstufe mit einer Mehrzahl von Halbleiterschaltern, wobei bei einem Multilevel-Umrichter mehr als zwei Spannungsniveaus am Ausgang der Schaltstufe erzeugt werden können. In einer möglichen Ausführungsform sind Multilevel-Umrichter aus einer Mehrzahl von Halbleiterschaltern aufgebaut, die je nach konkreter Ausführungsform auf unterschiedliche Weise mit einer Mehrzahl von als Hilfskondensatoren bezeichneten Kondensatoren verbunden werden. Die für das Funktionsprinzip eines solchen Multilevel-Umrichters wesentlichen Hilfskondensatoren dienen üblicherweise der Bereitstellung einer ihrer Anzahl entsprechenden Mehrzahl von Spannungsniveaus. Gemeinhin und so auch im Zuge der nachfolgenden Ausführungen werden die genannten Hilfskondensatoren auch als "flying capacitors" oder kurz "Flycaps" bezeichnet. Ein derartiger Multilevel-Umrichter wird in diesem Sinn auch als "Flycap-Multilevel-Umrichter" oder "Multilevel-Umrichter in Flycap-Topologie" bezeichnet. Im Zuge der nachführenden Ausführungen wird auf Flycap-Multilevel-Umrichter bzw. auf Multilevel-Umrichter in Flycap-Topologie näher eingegangen, wobei zur besseren Lesbarkeit anstelle dieser Begriffe synonym schlicht der Begriff "Multilevel-Umrichter" verwendet wird. Für die an den Hilfskondensatoren abfallenden Spannungen ist demgegenüber die Bezeichnung "Hilfsspannung" üblich.

Zur Versorgung eines Multilevel-Umrichters wird meist zwischen zwei Punkten seiner Schaltungstopologie eine Spannungsquelle angeschlossen, wobei auch hier die konkrete Ausführung je nach Anwendungsfall unterschiedlich sein kann. Punkte zum Anschluss einer Spannungsquelle werden dabei als Eingänge eines Multilevel-Umrichters bezeichnet. Im Fall von Wechselrichtern sind für Spannungsquellen Gleichspannungsquellen üblich, im Fall von Frequenzumrichtern, wie sie beispielsweise zum Betrieb elektrischer Maschinen eingesetzt werden, erfolgt die Versorgung üblicherweise anhand eines Zwischenkreises, der eine Gleichspannung zur Verfügung stellt und selbst wiederum von einem mit Wechselspannung gespeisten Gleichrichter versorgt werden kann. Als Ausgänge eines Multilevel-Umrichters werden hierbei insbesondere Punkte in seiner Schaltungstopologie betrachtet, an denen eine erzeugte Ausgangsgröße abgegriffen wird und/oder an denen weitere elektrische Betriebsmittel angeschlossen werden können.

Durch geeignete Ansteuerung der Halbleiterschalter eines Multilevel-Umrichters kann typischerweise eine große Zahl unterschiedlicher Verbindungspfade zwischen Spannungsquelle, Hilfskondensatoren und Ausgang des Multilevel-Umrichters realisiert werden. Spannungsquelle, Hilfskondensatoren und Ausgang des Multilevel-Umrichters können so auf verschiedene Arten selektiv miteinander verbunden werden, wodurch eine im Vergleich zu herkömmlichen Umrichtern große Zahl an unterschiedlichen Ausgangsspannungsniveaus bereitgestellt werden kann. Multilevel-Umrichter können demnach auch als Umschalter aufgefasst werden, die selektiv zwischen mehreren, ihnen durch die Hilfskondensatoren zur Verfügung gestellten Spannungsniveaus umschalten. Der aus der Stromrichtertechnik hinlänglich bekannte 2-Level Umrichter wird insbesondere aus diesem Grund nicht als Multilevel-Umrichter im Sinne der gegenständlichen Ausführungen aufgefasst.

Wird, wie in der Stromrichtertechnik üblich, zur Erzeugung von geforderten elektrischen Ausgangsgrößen auf die hinlänglich bekannte Methode der Pulsweitenmodulation (PWM) zurückgegriffen, kann die Mehrzahl von bei Multilevel-Umrichtern zur Verfügung stehenden Spannungsniveaus oftmals äußerst vorteilhaft eingesetzt werden. Bei einer PWM werden im gegenständlichen Zusammenhang von einem Multilevel-Umrichter Ausgangsspannungspulse variabler Pulsdauern ausgegeben, um innerhalb einer mit der Frequenz der PWM wiederkehrenden PWM-Periode, welche nachfolgend auch als mit einer Ansteuerfrequenz wiederkehrende Ansteuerperiode bezeichnet wird, eine meist vorgegebene Spannungs-Zeit-Fläche zu realisieren. Von einer so erzeugten Spannungs-Zeit-Fläche wird üblicherweise verlangt, dass sie jener Spannungs-Zeit-Fläche, die ein gewünschter Ausgangsspannungsverlauf in der gleichen Ansteuerperiode erzeugen würde, möglichst exakt entspricht. Aufgrund der höheren Anzahl an Spannungsniveaus kann bei Multilevel-Umrichtern dabei in vielen Fällen auf Spannungsniveaus zurückgegriffen werden, die näher an einem vorgegebenen Sollwert einer Ausgangsspannung liegen, was zu einer Reihe von praktischen Vorteilen führen kann.

Im Gegensatz zu gewöhnlichen 2-Level Umrichtern bieten Multilevel-Umrichter so den Vorteil einer feingranulareren Spannungsgenerierung. Außerdem ist die Frequenz der oftmals als "Grundton" bezeichneten dominanten Oberwelle einer erzeugten Ausgangsgröße meist um ein ganzzahliges Vielfaches größer als die Schaltfrequenz der einzelnen Halbleiterschalter. Als Oberwellen werden dabei harmonische Teilschwingungen einer erzeugten Ausgangsgröße verstanden, deren Frequenz in der Regel ein ganzzahliges Vielfaches der Ansteuerfrequenz beträgt. Die für eine Netzanschaltung üblicherweise notwendigen Ausgangsfilter können im Vergleich zu 2-Level-Umrichtern so deutlich kompakter ausfallen, was insbesondere verkleinerte Filterdrosseln erlaubt und damit insgesamt zu einem geringeren Platzbedarf und einem reduzierten Kostenaufwand führt. Durch geeignete Ansteuerstrategien der Halbleiterschalter kann überdies mit einer steigenden Anzahl an Spannungsniveaus bzw. Spannungslevels die Schaltbelastung der einzelnen Halbleiterschalter reduziert werden, was insbesondere Vorteile hinsichtlich des Verschleißes und der Wartung dieser Bauteile mit sich bringt.

Trotz der genannten Vorteile sind Multilevel-Umrichter in Flycap-Topologie am Markt noch nicht weit verbreitet. Ursächlich für die noch verbesserungsfähige Marktdurchdringung von Multilevel-Umrichtern ist eine Reihe von noch nicht zufriedenstellend gelösten Problemen in ihrem praktischen Einsatz. Als Beispiele dafür sind insbesondere die Angabe von modularen und mit der Anzahl an Spannungslevels skalierbaren Betriebsstrategien, sowie die Regelung der an den Hilfskondensatoren abfallenden Hilfsspannungen zu nennen. Die Regelung der an den Hilfskondensatoren abfallenden Hilfsspannungen dient üblicherweise dem Ziel, die Hilfsspannungen während des Betriebs konstant bei vorgegebenen Soll- bzw. Vorgabewerten zu halten. Da beim Entwurf von Betriebsstrategien für Multilevel-Umrichter üblicherweise von konstanten Hilfsspannungen bei überdies vorteilhaften Sollwerten ausgegangen wird, kann ein Drift von Hilfsspannungen gravierende Nachteile im Betrieb nach sich ziehen.

Ein weiterer Grund für den Wunsch nach konstanten Hilfsspannungen ergibt sich überdies aus der sogenannten "harmonischen Verzerrung" von erzeugten Ausgangsgrößen. Harmonische Verzerrung bedeutet in diesem Zusammenhang das verstärkte Auftreten von Oberwellen in den von einem Multilevel-Umrichter erzeugten Ausgangsgrößen, welche vor allem durch von ihren Sollwerten abweichende und/oder sich im Betrieb ändernde Hilfsspannungen verursacht werden. Eine derartige harmonische Verzerrung ist in den unterschiedlichsten Anwendungen, von Netzeinspeisung bis Prüfstandsbetrieb, nachteilig und deshalb klar unerwünscht. Aus den genannten Gründen kommt der Regelungsaufgabe des Konstanthaltens von Hilfsspannungen, was vielfach und so auch im Zuge der nachfolgenden Ausführungen als "Balancierung der Hilfskondensatoren" oder "Balancierung der Hilfsspannungen" bezeichnet wird, entscheidende Bedeutung zu und ist auch im Stand der Technik bekannt.

Die US 2017/0214309 A beschreibt in diesem Zusammenhang eine Betriebsstrategie für einen Multilevel-Umrichter in Flycap-Topologie. Darin wird insbesondere auf die Kosten, die Effizienz und die Schaltverluste des betrachteten Multilevel-Umrichters Bezug genommen, aber auch die Notwendigkeit beschrieben, die an den Hilfskondensatoren abfallenden Hilfsspannungen zu balancieren, womit das Halten der an den Hilfskondensatoren abfallenden Hilfsspannungen bei vorgegebenen Sollwerten gemeint ist. In der zitierten Druckschrift wird erwähnt, dass eine Anpassung der Pulsdauern der Ansteuerpulse, die zur Ansteuerung der im Multilevel-Umrichter vorgesehenen Halbleiterschalter verwendet werden, ein dazu geeignetes Mittel darstellen kann. Wie eine derartige Anpassung der Pulsdauern der Ansteuerpulse im Detail erfolgen kann, wird in der US 2017/0214309 A jedoch nicht erwähnt.

Auch aus dem zitierten Stand der Technik wird ersichtlich, dass die Beibehaltung von vorgegebenen Hilfsspannungen an den Hilfskondensatoren eine der Schlüsselaufgaben im Betrieb von Multilevel-Umrichtern darstellt. Im Realbetrieb kann es jedoch aus mehreren Gründen zu Störungen der Hilfsspannungen kommen. Da die Hilfskondensatoren aus offensichtlichen Gründen beim Öffnen und Schließen der Halbleiterschalter elektrisch ge- und entladen werden, kann bereits die stets gegebene Bauteilstreuung der Halbleiterschalter eine Ursache für Hilfsspannungen sein, die von ihren Sollwerten abweichen. Sich zeitlich ändernde elektrische Belastungen eines Flycap-Multilevel-Umrichters können sich in diesem Zusammenhang ebenfalls auf die Hilfsspannungen auswirken. In derartigen Fällen können die Hilfskondensatoren aufgrund einer zeitlich veränderlichen Belastung des Multilevel-Umrichters zu unterschiedlichen Zeitpunkten ebenfalls unterschiedlich stark ge- und entladen werden, was sich direkt und oft besonders nachteilig auf die gegebenen Hilfsspannungen auswirken kann.

Obwohl das Problem der Balancierung von Hilfskondensatoren ein im Stand der Technik bekanntes Problem darstellt, weisen die dort vorgeschlagenen Lösungsansätze oft signifikante Nachteile auf. So führt der oft vorgebrachte Ansatz, die in einem Multilevel-Umrichter gegebenen Hilfsspannungen zu messen, um diese Messwerte anschließend in einer Regelung der Hilfsspannungen einzusetzen, üblicherweise zu einem großen sensorischen, schaltungstechnischen und signalverarbeitungstechnischen Aufwand. Für derartige Messungen ist in vielen Fällen überdies die Abtastung der interessierenden Hilfsspannungen mit äußerst hohen Abtastraten erforderlich, was die Implementierung solcher Messungen oft von vornherein ausschließt. Um der Technologie der Multilevel-Umrichter zum Durchbruch zu verhelfen, erscheint es deshalb besonders wichtig, effiziente Betriebsstrategien für Multilevel-Umrichter zu etablieren, die es erlauben, eine gestörte Balance der Hilfsspannungen auch ohne den Einsatz aufwendiger Sensorik zu vermeiden.

Es ist deshalb Aufgabe der gegenständlichen Erfindung, den Betrieb von Multilevel-Umrichtern zu verbessern. Insbesondere soll eine einfach zu implementierende und zuverlässige Methodik angegeben werden, die es erlaubt, die an den Hilfskondensatoren abfallenden Hilfsspannungen konstant zu halten und diese damit zu balancieren.

Diese Aufgabe wird erfindungsgemäß durch die Merkmale der unabhängigen Ansprüche gelöst. Dabei wird von einem Multilevel-Umrichter in Flycap-Topologie ausgegangen, bei dem zumindest zwei Halbleiterschalter innerhalb einer mit einer Ansteuerfrequenz wiederkehrenden Ansteuerperiode durch Ansteuerpulse variabler Pulsdauern angesteuert werden, um zur Erzeugung einer Ausgangsspannung des Multilevel-Umrichters eine an einem Eingang des Multilevel-Umrichters angeschlossene Spannungsquelle, einen Ausgang des Multilevel-Umrichters und zumindest einen zwischen Eingang und Ausgang des Multilevel-Umrichters angeordneten Hilfskondensator selektiv miteinander zu verbinden, wobei sich am zumindest einen Hilfskondensator eine Hilfsspannung ausbildet. Zur Durchführung des erfindungsgemäßen Verfahrens ist es hierbei ausreichend, nur eine elektrische Spannung und/oder nur einen elektrischen Strom am Ausgang des Multilevel-Umrichters oder an einer elektrisch mit dem Ausgang des Multilevel-Umrichters verbundenen Stelle als elektrische Messgröße messtechnisch zu erfassen.

Der Kern der gegenständlichen Erfindung wird darauf aufbauend insbesondere von als "Schwingungsparametern" bezeichneten Parametern gebildet, die das Schwingungsverhalten, also beispielsweise die Frequenz und/oder die Amplitude und/oder die Phasenlage, von Oberwellen der gemessenen elektrischen Ausgangsgröße beschreiben. Die Frequenzen dieser Oberwellen entsprechen dabei ganzzahligen Vielfachen der Ansteuerfrequenz des Multilevel-Umrichters. Im Rahmen der gegenständlichen Erfindung wurde überraschenderweise erkannt, dass die Oberwellen von elektrischen Ausgangsgrößen eines Multilevel-Umrichters und damit die genannten Schwingungsparameter in einem bemerkenswerten Zusammenhang zu den an den Hilfskondensatoren des Multilevel-Umrichters abfallenden Hilfsspannungen stehen. Dieser erstaunliche Zusammenhang wird im Rahmen der gegenständlichen Erfindung zur Balance der Hilfsspannungen genutzt und hat in einer besonders vorteilhaften Weise zur Konsequenz, dass durch eine Unterdrückung von Oberwellen in einer Ausgangsgröße des Multilevel-Umrichters eine Balancierung der gegebenen Hilfsspannungen herbeigeführt werden kann.

Unter Verwendung zumindest eines Schwingungsparameters zur Beschreibung zumindest einer Oberwelle einer elektrischen Ausgangsgröße wird in diesem Sinn zumindest eine Korrekturpulsdauer ermittelt, welche dem Zweck dient, die Amplitude der zumindest einen betrachteten Oberwelle zu verkleinern. Um das erfindungsgemäße Ziel, die Balancierung der Hilfsspannungen umzusetzen, wird zumindest ein Halbleiterschalter in weiterer Folge mit einem Ansteuerpuls der ermittelten Korrekturpulsdauer angesteuert.

Der Zusammenhang zwischen den Oberwellen von elektrischen Ausgangsgrößen eines Multilevel-Umrichters und den an seinen Hilfskondensatoren abfallenden Hilfsspannungen stellt dabei die Basis für eine ganze Reihe von weiteren vorteilhaften Ausführungen der gegenständlichen Erfindung dar. In einer vorteilhaften Ausgestaltung können aus den ermittelten Schwingungsparametern Schätzwerte für die an den Hilfskondensatoren abfallenden Hilfsspannungen ermittelt werden und deren Abweichungen zu für die geschätzten Hilfsspannungen vorgegeben Sollwerten bestimmt werden. Aus diesen Abweichungen können anhand unterschiedlichster Methoden aus der Regelungstechnik die erwähnten Korrekturpulsdauern bestimmt werden.

Das erfindungsgemäße Verfahren kann dabei in jeglicher Ansteuerelektronik (analog/digital) für Multilevel-Umrichter mit geschalteten Hilfskondensatoren eingesetzt werden. Die konkrete Anzahl an Hilfskondensatoren ist hierbei für einen Einsatz des erfindungsgemäßen Verfahrens unerheblich, auch die konkrete Realisierung der Hilfskondensatoren ist in diesem Zusammenhang nicht von Bedeutung. So können in einem Multilevel-Umrichter, in dem das erfindungsgemäße Verfahren angewandt wird, Hilfskondensatoren eingesetzt werden, die sich beispielsweise in ihrer Bauform und/oder in ihrer Baugröße und/oder in ihrer Kapazität unterscheiden. Auch schränkt die konkrete Topologie eines Multilevel-Umrichters den Einsatz des erfindungsgemäßen Verfahrens nicht ein.

Die gegenständliche Erfindung wird nachfolgend unter Bezugnahme auf die Figuren 1 bis 8 näher erläutert, die beispielhaft, schematisch und nicht einschränkend vorteilhafte Ausgestaltungen der Erfindung zeigen. Dabei zeigt

Fig. 1 eine schematische Darstellung eines 5-Level Umrichters mit Ausgangsfilter,

Fig. 2 Schalterkombinationen für das Spannungslevel u/4 im Fall eines 5-Level Umrichters,

Fig. 3 einen zeitlichen Verlauf einer Ausgangsspannung und dessen spektrale Zerlegung,

Fig. 4 einen ersten Verlauf von Ansteuerpulsen,

Fig. 5 einen zweiten Verlauf von Ansteuerpulsen,

Fig. 6 einen dritten Verlauf von Ansteuerpulsen bei Einsatz des erfindungsgemäßen Verfahrens,

Fig. 7 ein erstes Blockschaltbild zur Implementierung des erfindungsgemäßen Verfahrens,

Fig. 8 ein zweites Blockschaltbild zur Implementierung des erfindungsgemäßen Verfahrens.

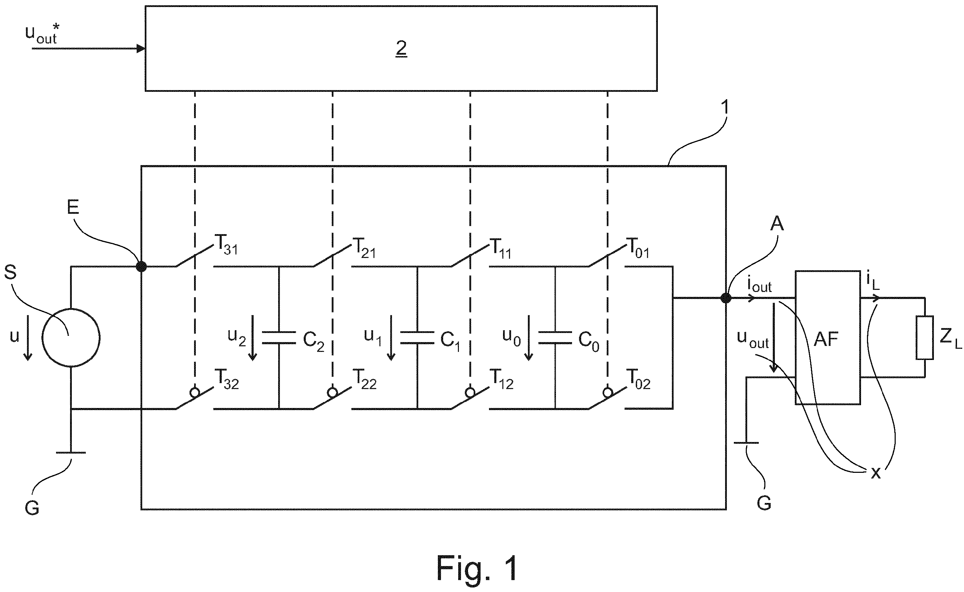

Fig. 1 zeigt eine schematische Darstellung eines 5-Level-Umrichters 1 in Flycap-Topologie. Eine mit dem Eingang E des 5-Level-Umrichters 1 verbundene Spannungsquelle S versorgt den 5-Level-Umrichter 1 in der gezeigten Situation mit der Eingangsspannung $u$. Die Eingangsspannung $u$ ist dabei bevorzugt in Form einer Gleichspannung (DC-Versorgung) gegeben. In diesem Fall kann die Spannungsquelle S insbesondere als Gleichrichter oder DC-Zwischenkreis ausgeführt werden. Es sei jedoch angemerkt, dass zur Umsetzung der gegenständlichen Erfindung auch eine Wechselspannungsquelle eingesetzt werden kann, beispielsweise in Form eines Wechselrichters, welcher selbst wiederum von einem Gleichrichter versorgt wird, oder in Form eines (Frequenz-)Umrichters. Weist ein Multilevel-Umrichter, auf den das erfindungsgemäße Verfahren angewandt wird, eine andere Topologie auf, sind auch andere Anschlusspunkte für eine Spannungsquelle S und damit als Eingang E denkbar. Der 5-Level-Umrichter 1 ist gegenständlich auf das Bezugspotential G bezogen.

Neben der Spannungsquelle S sind im gezeigten Fall drei Hilfskondensatoren $C_0$, $C_1$, $C_2$ vorgesehen, die wie dargestellt die Hilfsspannungen $u_0$, $u_1$, $u_2$ bereitstellen. Die Anzahl der Hilfskondensatoren $C_0$, $C_1$, $C_2$ ist hinsichtlich der Anwendbarkeit des erfindungsgemäßen Verfahrens beliebig, so sind auch eine größere oder auch eine kleinere Anzahl an Hilfskondensatoren denkbar, die auf eine andere Weise miteinander verschaltet sein können. Zumindest ein Hilfskondensator ist jedoch notwendig. Zur Verbindung von Spannungsquelle S, Hilfskondensatoren $C_0$, $C_1$, $C_2$ und Ausgang A werden in der gezeigten Situation die Halbleiterschalter $T_{01}, T_{02}, ... T_{31}, T_{32}$ eingesetzt, welche insbesondere durch Transistoren verschiedenster Art, wie beispielsweise Feldeffekt-Transistoren, realisiert werden.

Die Ansteuerung der Halbleiterschalter $T_{k1}$, $T_{k2}$ erfolgt dabei wie in der Halbleitertechnik und Leistungselektronik üblich durch elektrische Ansteuerpulse in Form elektrischer Spannungen, welche typischerweise eine fixe Pulshöhe aufweisen. Die Pulsbreiten bzw. Pulsdauern $\tau_k$ dieser Ansteuerpulse können jedoch üblicherweise und so auch im gegenständlichen Fall verändert und an die Anforderungen einer gegebenen Situation angepasst werden. Eine bestimmte Abfolge von Schaltpulsen für die Halbleiterschalter $T_{01}, T_{02}, ... T_{31}, T_{32}$ wird in diesem Zusammenhang auch als Schaltmuster bezeichnet. Im Zuge der Umsetzung eines Schaltmusters wird typischerweise innerhalb einer mit einer Ansteuerfrequenz $f_A$ wiederkehrenden Ansteuerperiode AP jeder Schalter zumindest einmal anhand eines Ansteuerpulses der Pulsdauer $\tau_k$ geöffnet und danach wieder geschlossen, wodurch verschiedene gewünschte Ausgangsspannungen $u_{out}$ erzeugt werden können. Diese Vorgehensweise ist in der Halbleitertechnik und Leistungselektronik insbesondere als PWM (Pulsweitenmodulation)-Technik hinlänglich bekannt. Ein Schaltmuster wird im in Fig. 1 gezeigten Fall von der Steuereinheit 2 erzeugt und an den Halbleiterschaltern $T_{01}, T_{02}, ... T_{31}, T_{32}$ anhand der genannten elektrischen Ansteuerpulse umgesetzt. Die Steuereinheit 2 kann dabei insbesondere durch mikroprozessorbasierte Hardware, Mikrocontroller und/oder integrierte Schaltungen (ASIC, FPGA) umgesetzt werden. Die Steuereinheit 2 nimmt gegenständlich auch den zu realisierenden Sollwert $u_{out}^*$ für die Ausgangsspannung $u_{out}$ auf. Da das erfindungsgemäße Verfahren wie erwähnt nicht auf die in Fig.1 gezeigte Topologie beschränkt ist, sind auch andere Stellen als Ausgang A denkbar.

Anders ausdrückt kann jeder Hilfskondensator $C_j$ mithilfe der Halbleiterschalter $T_{01}, T_{02}, ... T_{31}, T_{32}$ überbrückt, in Serie mit einem anderen oder in Serie mit mehreren anderen Hilfskondensatoren verbunden werden. Die Laufvariable $j$ dient hierbei der Indizierung der im betrachteten 5-Level-Umrichter 1 vorgesehenen Hilfskondensatoren $C_0$, $C_1$, $C_2$. An den Ausgang A werden damit in Abhängigkeit von den Schaltzuständen der Halbleiterschalter $T_{01}, T_{02}, ... T_{31}, T_{32}$ verschiedene, serielle Verschaltungen verschiedener Kombinationen von Hilfskondensatoren $C_0$, $C_1$, $C_2$ geschaltet.

Die Halbleiterschalter $T_{k1}$, $T_{k2}$, wobei die Laufvariable $k$ der Indizierung der gezeigten Halbleiterschalter dient, sind hierbei jeweils komplementär geschaltet. Das bedeutet, dass stets einer der beiden Schalter geöffnet und der andere geschlossen ist, wodurch die Halbleiterschalter $T_{k1}$, $T_{k2}$ ein funktionell zusammenhängendes Paar von Halbleiterschaltern $T_{k1}$, $T_{k2}$ bilden. Im gegenständlichen Fall ist es deshalb ausreichend, für eine Beschreibung einer gegebenen Stellung des Schalterpaares von Halbleiterschaltern $T_{k1}$, $T_{k2}$ von jedem dieser Schalterpaare nur die Schalterstellung des oberen (oder unteren) Halbleiterschalters $T_{k1}$ (oder $T_{k2}$) darzustellen. Üblicherweise wird ein geöffneter Halbleiterschalter $T_{k1}$ dabei mit "1" bzw. "$T_{k1}$ = 1" spezifiziert, ein geschlossener Halbleiterschalter $T_{k1}$ demgegenüber mit "0" bzw. "$T_{k1}$ = 0". Zur vollständigen Beschreibung sämtlicher in einem Multilevel-Umrichter 1 auftretenden Schalterstellungen ist dabei vielfach eine Aneinanderreihung von Ziffern "1" und "0" üblich, z.B. "0110", wobei die Ziffern von links nach rechts den Halbleiterschaltern $T_{k1}$ von links nach rechts zuzuordnen sind. In der in Fig. 1 gezeigten Situation würde

"0110" demnach $T_{31} = 0, T_{21} = 1, T_{11} = 1, T_{01} = 0$ bedeuten.

Im in Fig. 1 gezeigten Aufbau ist an den Ausgang A des 5-Level-Umrichters 1 weiters das Ausgangsfilter AF angeschlossen. Am Ausgangsfilter AF liegt dabei die Ausgangsspannung $u_{out}$ an, welche den in das Ausgangsfilter AF fließenden Ausgangsstrom $i_{out}$ verursacht. Im gegenständlichen Fall verlässt das Ausgangsfilter AF der Laststrom $i_L$, der in der Folge die Last $Z_L$ versorgt. Das Ausgangsfilter AF dient in derartigen Fällen üblicherweise der Glättung von Ausgangsspannung $u_{out}$ und Ausgangsstrom $i_{out}$, es kann aber auch ein bekanntes EMV (Elektromagnetische Verträglichkeit) Filter sein oder ein solches umfassen. Eine bevorzugte Ausführung eines Ausgangsfilters AF ist vielfach durch ein hinlänglich bekanntes LCL-Filter gegeben. Grundsätzlich dienen Ausgangsfilter AF der Unterdrückung von Störsignalen, welche von Umrichtern neben den eigentlich gewünschten Zeitverläufen von Ausgangsgrößen miterzeugt werden. Mit Störsignalen sind im gegenständlichen Zusammenhang insbesondere Oberwellen in der Ausgangsspannung $u_{out}$ und dem Ausgangsstrom $i_{out}$ gemeint, wobei als Oberwellen im gegenständlichen Zusammenhang Frequenzanteile von $u_{out}$ und $i_{out}$ zu verstehen sind, deren Frequenzen je einem ganzzahligen Vielfachen der Ansteuerfrequenz $f_A$ entsprechen. Zu diesem Zweck wird das Ausgangsfilter AF üblicherweise so dimensioniert, dass eine zufriedenstellende Unterdrückung insbesondere der dominierenden Oberwelle des Laststromes $i_L$ erreicht wird. Die Frequenz der dominierenden Oberwelle ist hierbei üblicherweise durch das Produkt der Anzahl von Schalterpaaren $T_{k1}, T_{k2}$ mit der Ansteuerfrequenz $f_A$ gegeben und wird vielfach als "Grundton" bezeichnet. Für Oberwellen, deren Frequenz zwischen der Ansteuerfrequenz $f_A$ und der Frequenz des Grundtones liegt, wird vielfach und so auch im Zuge der nachfolgenden Ausführungen von der Bezeichnung "Unterton" Gebrauch gemacht. An dieser Stelle ist zu betonen, dass das Ausgangsfilter AF keine notwendige Voraussetzung für eine Umsetzung des erfindungsgemäßen Verfahrens darstellt. Zur Umsetzung des erfindungsgemäßen Verfahrens können neben der Ausgangsspannung $u_{out}$ und dem Ausgangsstrom $i_{out}$ auch Messungen von im Ausgangsfilter AF vorherrschenden elektrischen Größen herangezogen werden, was in Fig. 1 durch die Variable x angedeutet ist.

Wie erwähnt spielen die Hilfsspannungen $u_0, u_1, u_2$ eine wesentliche Rolle im Betrieb eines Multilevel-Umrichters 1. Im Fall des gezeigten 5-Level-Umrichters 1 erweist es sich als besonders vorteilhaft, die Hilfsspannungen $u_0, u_1, u_2$ so zu wählen, dass die Differenzen zwischen den an zwei benachbarten Hilfskondensatoren $C_0, C_1$ bzw. $C_1, C_2$ abfallenden Hilfsspannungen $u_0, u_1$ bzw. $u_1, u_2$ stets durch die Hilfsspannung $u_0$ des ausgangsseitigen Hilfskondensators $C_0$ gegeben sind. Wird selbiges auch für die Differenz zwischen der Spannung $u$ der Spannungsquelle S und der Hilfsspannung $u_2$ des ersten eingangsseitigen Hilfskondensators $C_2$ verlangt, kann dies mathematisch durch die Gleichungsbedingung

$$u - u_2 = u_2 - u_1 = u_1 - u_0 = u_0$$

ausgedrückt werden, welche insbesondere durch die Zuweisung

$$u_0 = \frac{u}{4}, u_1 = \frac{2u}{4}, u_2 = \frac{3u}{4}$$

erfüllt wird. Diese Werte werden bevorzugt auch als Soll- bzw. Vorgabewerte $u_0^*$, $u_1^*$, $u_2^*$ für die Hilfsspannungen $u_0, u_1, u_2$ herangezogen. Sollwerte $u_0^*$, $u_1^*$, $u_2^*$ für die Hilfsspannungen $u_0, u_1, u_2$ können wie der Sollwert $u_{out}^*$ für die Ausgangsspannung $u_{out}$ ebenso an die Steuereinheit 2 weitergegeben werden. An dieser Stelle ist anzumerken, dass für andere Multilevel-Umrichter 1 mit einer unterschiedlichen Anzahl an Schaltstufen auf die gleiche Weise ebenfalls vorteilhafte Werte für die Hilfsspannungen ermittelt werden können. Die gegenständliche Erfindung setzt diese bevorzugte Wahl von Hilfsspannungen $u_0, u_1, u_2$ jedoch keinesfalls voraus, und könnte auch bei anders gewählten Sollwerten $u_0^*$, $u_1^*$, $u_2^*$ für die Hilfsspannungen $u_0, u_1, u_2$ eingesetzt werden. Ein für die Praxis wichtiger Vorteil genau dieser Wahl ist jedoch, dass so eine gleichmäßige Aufteilung der resultierenden Spannungsstufen auf das Spannungsintervall von 0 bis $u$, welches mit der Ausgangsspannung $u_{out}$ darstellbar ist, erreicht wird, was vor allem eine feingranulare Spannungserzeugung im gesamten Spannungsintervall erlaubt. Allgemein könnte für einen N-Level-Umrichter, der seiner Bezeichnung entsprechend über eine Anzahl von N Spannungsniveaus verfügt, eine dementsprechende Wahl als $u_j^* = j \dfrac{u}{N-1}$ dargestellt werden. Es sei an dieser Stelle jedoch erneut angemerkt, dass die vorgestellte Zuweisung von Sollwerten $u_j^*$ für die Hilfsspannungen $u_j$ nicht zwingend der Fall sein muss, und dass für einen erfindungsgemäßen Betrieb eines Multilevel-Umrichters 1 auch andere Sollwerte $u_j^*$ gewählt werden könnten, insbesondere da das erfindungsgemäße Verfahren wie erwähnt nicht auf die Anzahl von drei Hilfskondensatoren $C_0$, $C_1$, $C_2$ des gegenständlichen Ausführungsbeispiels beschränkt ist. Wird das erfindungsgemäße Verfahren bei einem Multilevel-Umrichter eingesetzt, der über eine andere Anzahl von Hilfskondensatoren verfügt, ergeben sich aus der gleichen Forderung nach identen Differenzen zwischen den an zwei benachbarten Hilfskondensatoren abfallenden Hilfsspannungen unterschiedliche Vorgabewerte für die Hilfsspannungen.

Um die in einem Multilevel-Umrichter 1 gegebenen Hilfsspannungen zu Betriebsbeginn beispielsweise auf die vorgestellten Sollwerte $u_j^* = j\frac{u}{N-1}$ oder auch auf andere Sollwerte zu laden, stehen mehrere Möglichkeiten zur Verfügung. So können die gegebenen Paare von Halbleiterschaltern $T_{k1}, T_{k2}$ zu Betriebsbeginn gleichermaßen auf "1" geschaltet werden, also die Schalterstellung "1111" umgesetzt werden. Nach Erreichen der für die jeweiligen Hilfskondensatoren $C_j$ gewünschten Spannungslevel $u_j^*$ können die Paare von Halbleiterschaltern $T_{k1}, T_{k2}$ von rechts, also ausgangsseitig, beginnend wieder auf "0" geschaltet werden, wodurch die anfänglich vorliegende Verschaltung aller Hilfskondensatoren $C_j$ nach und nach aufgelöst wird und die Hilfsspannungen $u_j$ von dann nach und nach nicht mehr mit dem Pluspol $u$ der Spannungsquelle S verbundenen Hilfskondensatoren $C_j$ auf einem Spannungslevel stehen bleibt.

Beim dargestellten 5-Level-Umrichter 1 ergeben sich durch die vorgestellte Wahl der Hilfsspannungen von $u_0 = \frac{u}{4}$, $u_1 = \frac{2u}{4}$, $u_2 = \frac{3u}{4}$ sechzehn mögliche Ansteuerkombinationen, mit denen der Ausgangsspannung $u_{out}$ die fünf Spannungsniveaus $\left\{0, \frac{u}{4}, \frac{2u}{4}, \frac{3u}{4}, u\right\}$ zugewiesen werden können. Während das niedrigste Spannungsniveau $u_{out} = 0$ durch die Schalterkombination "0000" und das höchste Spannungsniveau $u_{out} = u$ durch die Schalterkombination "1111" erreicht wird, gibt es für alle anderen Spannungsniveaus zumindest vier unterschiedliche Schalterkombinationen.

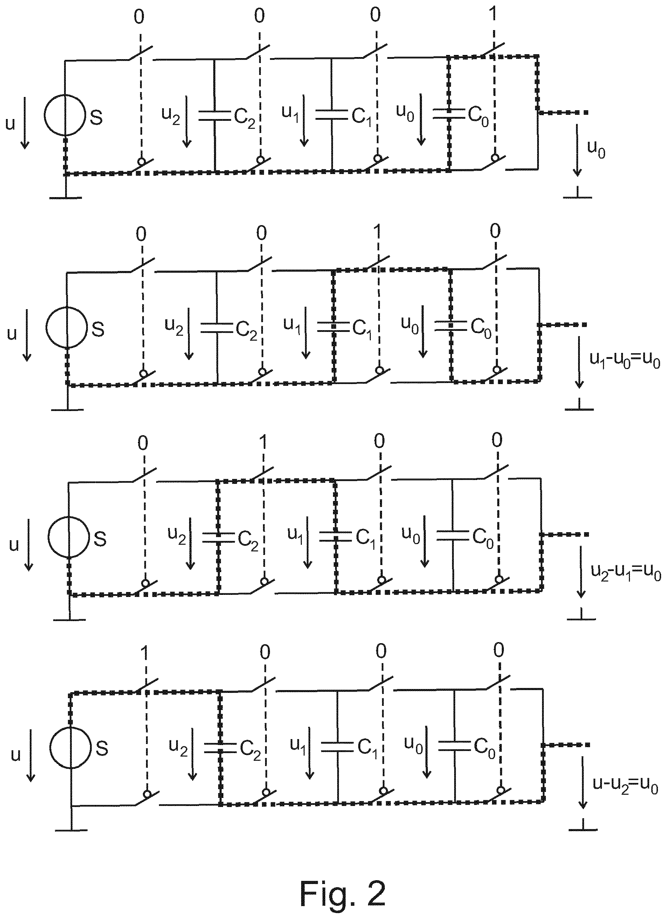

Wie das gleiche Spannungsniveau konkret mit mehreren Schalterkombinationen erzeugt werden kann, ist in Fig. 2 auf Basis einer abstrakteren Betrachtung des gegenständlichen 5-Level-Umrichters 1 gezeigt. Dabei werden mithilfe der dargestellten Schalterkombinationen vier serielle Verschaltungen der Hilfskondensatoren $C_0$, $C_1$, $C_2$ realisiert, die zu vier verschiedenen Verbindungspfaden zwischen den Hilfskondensatoren $C_0$, $C_1$, $C_2$, der Spannungsquelle S und dem Ausgang A führen. Im in Fig. 2 gezeigten Fall erzeugen alle dargestellten Schalterstellungen die gleiche Ausgangsspannung $u_{out} = \frac{u}{4}$. Schalterstellungen, die die gleiche Ausgangsspannung zur Folge haben, werden in diesem Zusammenhang insbesondere als "redundante Schalterstellungen" bzw. "redundante Schalterkombinationen" bezeichnet. Hierbei ist anzumerken, dass idente Ausgangsspannungen $u_{out}$ in diesen Fällen genau dann eintreten, wenn die oben erwähnte Gleichungsbedingung für gleiche Spannungsdifferenzen zwischen den Hilfsspannungen $u_0$, $u_1$, $u_2$ zweier benachbarter Hilfskondensatoren $C_0$, $C_1$, $C_2$ erfüllt ist. Werden dabei im Zuge einer Pulsweitenmodulation (PWM) bestimmte Spannungsniveaus am Ausgang des Multilevel-Umrichters 1 benötigt und existieren für diese Spannungsniveaus mehrere redundante Schaltungskombinationen, kann innerhalb einer Ansteuerperiode AP in einer vorteilhaften Weise fortlaufend zwischen diesen redundanten Schaltungskombinationen gewechselt werden und damit eine selektive Auswahl aus den redundanten Schaltungskombinationen getroffen werden. Da sich so innerhalb einer Ansteuerperiode AP üblicherweise mehrere, kleinere Teilimpulse in den erzeugten Ausgangsgrößen ergeben, wird so insbesondere die Restwelligkeit in den vom Multilevel-Umrichter 1 erzeugten Ausgangsgrößen reduziert. Zur Umsetzung dieses Konzeptes ist es jedoch entscheidend, dass sämtliche Hilfsspannungen $u_0$, $u_1$, $u_2$ während des Betriebs möglichst konstant und dabei auch möglichst nahe an ihren Sollwerten verbleiben.

Zur näheren Erklärung, warum im Realbetrieb von Multilevel-Umrichtern 1 nachteilige Veränderungen der Hilfsspannungen $u_0$, $u_1$, $u_2$ auftreten können, sei zunächst auf den Umstand verwiesen, dass ein Hilfskondensator $C_j$ genau dann geladen wird, wenn für die Differenz der Schalterstellungen der benachbarten Halbleiterschalter $T_{j+1,1} - T_{j,1} = 1$ gilt, und dass er genau dann entladen wird, wenn für ebenjene Differenz $T_{j+1,1} - T_{j,1} = -1$ gilt. Die Laufvariable $j$ dient hierbei wie zuvor der Indizierung der im betrachteten 5-Level-Umrichter 1 vorgesehenen Hilfskondensatoren $C_0$, $C_1$, $C_2$. Üblicherweise treten während einer Ansteuerperiode AP für einen Hilfskondensator $C_j$ ladende sowie entladende Schalterstellungen in einem gleichen Maß auf. Sind hierbei die Dauern der entstehenden ladenden und entladenden zeitlichen Teilintervalle ident und wird jene Ladungsmenge, die einem Hilfskondensator $C_j$ bei einer dementsprechenden Entladung entnommen wird durch einen Ladevorgang wieder in den Hilfskondensator $C_j$ eingebracht, entsteht eine

sogenannte ausgeglichene Ladungsbilanz über eine Ansteuerperiode AP, was zu gleichen Hilfsspannungen $u_0$, $u_1$, $u_2$ zu Beginn und Ende einer Ansteuerperiode AP führt.

In der Praxis auftretende Schmutzeffekte, wie Bauteilstreuungen der Halbleiterschalter $T_{01}, T_{02}, ... T_{31}, T_{32}$, und zeitlich veränderliche Lastströme $i_L$, haben allerdings vielfach eine Abweichung von dieser Idealsituation zur Folge. Insbesondere zeitlich veränderliche Lastströme $i_L$ können hierbei dazu führen, dass sich die Ladungsentnahme in einer Entladephase eines Hilfskondensators $C_j$ und die Ladungseinbringung in einer Ladephase unterscheiden, wodurch sich die am Hilfskondensator $C_j$ abfallende Hilfsspannung $u_j$ mitunter signifikant verändern kann.

Unter anderem aus diesen Gründen zielt das erfindungsgemäße Verfahren darauf ab, die Balance von Hilfsspannungen im Betrieb von Multilevel-Umrichtern in Flycap-Topologie 1 zu verbessern. Zu diesem Zweck wird erfindungsgemäß die Erkenntnis genutzt, dass im Umkehrschluss durch ein bewusstes Modifizieren der Pulsdauern $\tau_k$ der Ansteuerpulse, welche zum Öffnen und Schließen der Halbleiterschalter $T_{01}, T_{02}, ... T_{31}, T_{32}$ eingesetzt werden, Störungen der Balance der Hilfsspannungen $u_0$, $u_1$, $u_2$ gezielt entgegengewirkt werden kann. Dementsprechend sieht das erfindungsgemäße Verfahren vor, die Pulsdauern $\tau_k$ der jeweiligen Ansteuerpulse zum Öffnen und Schließen der Halblei- terschalter $T_{01}, T_{02}, ... T_{31}, T_{32}$ zu vergrößern bzw. zu verkleinern, in einer bevorzugten Weise um 1% bis 10%, in einer weiteren bevorzugten Weise um 10% bis 50% und in einer weiteren bevorzugten Weise um 50% bis 100% ihres ursprünglichen Wertes, sodass die Hilfskondensatoren $C_0$, $C_1$, $C_2$ so geladen und entladen werden, dass sich eine ausgeglichene Ladungsbilanz an den Hilfskondensatoren $C_0$, $C_1$, $C_2$ einstellt und die zugehörigen Hilfsspannungen $u_0$, $u_1$, $u_2$ damit konstant gehalten und balanciert werden.

Zur Umsetzung dieser Modifikation der Pulsdauern $\tau_k$ wird erfindungsgemäß auf eine bemerkenswerte Erkenntnis zurückgegriffen, nämlich dass zwischen den Oberwellen eines von einem Multilevel-Umrichter 1 erzeugten Ausgangssignals und den an seinen Hilfskondensatoren abfallenden Hilfsspannungen $u_0$, $u_1$, $u_2$ ein überraschender und ebenso erstaunlicher, insbesondere aber analytisch beschreibbarer Zusammenhang besteht. Hierbei zeigt sich, dass insbesondere aus den Amplituden und den Phasenlagen der Untertöne, also den Oberwellen einer Ausgangsgröße wie Ausgangsspannung $u_{out}$ oder Ausgangsstrom $i_{out}$, deren Frequenzen zwischen der Ansteuerfrequenz $f_A$ und der Frequenz des Grundtones liegen, auf die tatsächlichen Werte der an den Hilfskondensatoren $C_0$, $C_1$, $C_2$ abfallenden Hilfsspannungen $u_0$, $u_1$, $u_2$ geschlossen werden kann. Insbesondere wurde erkannt, dass verschwindende Amplituden der Untertöne in einer Ausgangsgröße eines Multilevel-Umrichters 1 wie dem aus Fig. 1 gleichbedeutend sind mit balancierten, also konstanten Hilfsspannungen. Im Zustand balancierter Hilfsspannungen $u_0$, $u_1$, $u_2$ ist hierbei besonders bemerkenswert, dass in diesem Fall Ausgangsgrößen wie die Ausgangsspannung $u_{out}$ nur noch Frequenzanteile um- fassen, deren Frequenzen ganzzahligen Vielfachen der Frequenz des Grundtones entsprechen.

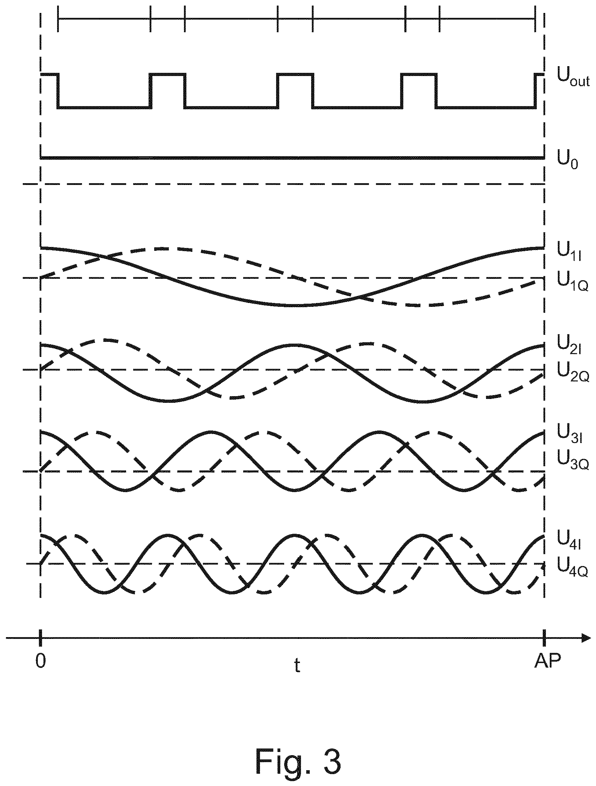

Um diesen Zusammenhang und die Umsetzung der erfindungsgemäßen Schritte näher zu beschreiben, zeigt Fig. 3 einen möglichen zeitlichen Verlauf einer Ausgangsgröße und von vier darin enthaltenen Oberwellen. Konkret stellt die erste Zeile des Diagramms dabei einen möglichen Zeitverlauf einer resultierenden, gepulsten Ausgangsspannung $u_{out}$ dar. In den nachfolgenden Zeilen ist eine qualitative Darstellung der ersten vier Oberwellen gezeigt, wobei diese in zwei zueinander um 90 Grad phasenverschobene sinus- bzw. cosinusförmige Anteile zerlegt sind, was in der Fachliteratur auch als IQ-Verfahren bekannt ist. In einer vorteilhaften Weise können diese Signalanteile so gewählt werden, dass von einem dieser um 90 Grad zueinander phasenverschobenen Signalanteile je ein Nulldurchgang mit dem Beginn und mit dem Ende einer Ansteuerperiode zusammenfällt. Zur Beschreibung dieser um jeweils 90 Grad zueinander phasenverschobenen Signalkomponenten mittels geeigneter Schwingungsparameter werden in Fig. 3 die Amplituden bzw. Ge- wichte $U_{1I}$, $U_{1Q}$, $U_{2I}$, ... $U_{4I}$, $U_{4Q}$ herangezogen, welche mittels einer ganzen Reihe von Verfahren aus der Signalverarbeitung bestimmt werden können. Aus der entsprechenden Literatur sind hierfür insbesondere die (diskrete) Fourieranalyse oder das genannte IQ-Verfahren zu nennen.

Wie erwähnt stehen die Oberwellen in einem analytisch darstellbaren Zusammenhang zu den Hilfsspannungen $u_0$, $u_1$, $u_2$. Konkret ergeben sich für entsprechend dem IQ-Verfahren ermittelte Signalkomponenten und deren Gewichte $U_{1I}$, $U_{1Q}$, $U_{2I}$, ... $U_{4I}$, $U_{4Q}$ mit dem sogenannten Modulationsgrad $m$, welcher gegenständlich für die Relation aus Soll- Ausgangsspannung $u_{out}^*$ und maximal darstellbarer Ausgangsspannung $u$ steht, d.h. $m = \dfrac{u_{out}^*}{u}$, für den Gleichanteil der Ausgangsspannung die Beziehung

$$U_0 = mu,$$

für die erste Oberwelle (PWM-Grundwelle, erster "Unterton")

$$U_{1I} = \frac{2}{\pi} sin(\pi m)(u_0 - u_1 - u_2 + u), \quad U_{1Q} = \frac{2}{\pi} sin(\pi m)(-u_0 - u_1 + u_2),$$

für die zweite Oberwelle bzw. den zweiten Unterton

$$U_{2I} = \frac{1}{\pi} sin(2\pi m)(-2u_0 - 2u_1 - 2u_2 + u), \quad U_{2Q} = 0$$

und für die vierte Oberwelle, die auch den Grundton der Ausgangsgröße beschreibt

$$U_{4I} = \frac{2}{\pi} sin(4\pi m) \cdot u, \quad U_{4Q} = 0.$$

Während der Gleichanteil sowie der Grundton nur vom Modulationsgrad $m$ abhängen, sind insbesondere die Untertöne auch von den Hilfsspannungen abhängig. Man kann sich an dieser Stelle leicht davon überzeugen, dass Hilfsspannungen, die konstant bei $u_0 = \frac{u}{4}$, $u_1 = \frac{2u}{4}$, $u_2 = \frac{3u}{4}$ liegen, dazu führen, dass die Untertöne der Ausgangsspannung verschwinden.

Die gezeigten Zusammenhänge verdeutlichen, dass die Erhaltung der Ladungsbilanz an den Hilfskondensatoren $C_0$, $C_1$, $C_2$ bzw. das Konstanthalten bzw. Balancieren der Hilfsspannungen $u_0$, $u_1$, $u_2$ gleichbedeutend mit der Unterdrückung der Untertöne ist. Werden die Pulsdauern $\tau_k$ nun so modifiziert bzw. angepasst, dass sich bei den genannten Sollwerten balancierte Hilfsspannungen $u_0$, $u_1$, $u_2$ ergeben, werden die Gewichte $U_{1I}$, $U_{1Q}$, $U_{2I}$, $U_{2Q}$ zu Null gebracht. Im Umkehrschluss bedeuten zu Null gebrachte Gewichte $U_{1I}$, $U_{1Q}$, $U_{2I}$, $U_{2Q}$ balancierte Hilfsspannungen. Das Balancieren von Hilfsspannungen und das Unterdrücken von Untertönen ist demnach gleichwertig. Dieser erstaunliche Zusammenhang kann in angepasster Form auch für andere Topologien von Multilevel-Kondensatoren, beispielsweise mit einer anderen Anzahl an Hilfskondensatoren oder mit anderen Sollwerten für die Hilfsspannungen, angegeben werden.

Die Anpassung der Pulsdauern $\tau_k$ kann dabei in einer bevorzugten Weise durch die Ermittlung von neuen, sogenannten Korrekturpulsdauern $\tau_k^*$ auf Basis der Gewichte $U_{1I}$, $U_{1Q}$, $U_{2I}$, $U_{2Q}$ erfolgen. Die neuen Korrekturpulsdauern $\tau_k^*$ ersetzen dabei bereits bestehende Pulsdauern $\tau_k$ zur Ansteuerung der Halbleiterschalter $T_{k1}$, $T_{k2}$ und modifizieren deren Öffnungs- und Schließzeiten dabei so, dass sich balancierte Hilfsspannungen $u_0$, $u_1$, $u_2$ einstellen. Die Korrekturpulsdauern $\tau_k^*$ können dabei auch erst in einem zukünftigen Verfahrensschritt zur tatsächlichen Ansteuerung eines Halbleiterschalter $T_{01}$, $T_{02}$,... $T_{31}$, $T_{32}$ herangezogen werden.

Zur Umsetzung des erfindungsgemäßen Verfahrens ist anzumerken, dass die Verwendung von Gewichten $U_{\eta I}$ und $U_{\eta Q}$ von zwei um 90 Grad zueinander phasenverschoben Teilsignalen einer Oberwelle, wobei von einem dieser Teilsignale bevorzugt ein Nulldurchgang mit dem Beginn und ein Nulldurchgang mit dem Ende einer Ansteuerperiode zusammenfallen, nur eine unter vielen Herangehensweisen darstellt. Die Laufvariable $\eta$ läuft im Fall des gegenständlichen 5-Level-Umrichters 1 von eins bis vier. Genauso gut kann die Ermittlung von Korrekturpulsdauern $\tau_k^*$ auf Basis von Amplitude $U_\eta$ und Phasenlage $\varphi_\eta$ einer gesamten Oberwelle erfolgen, wobei hier bekanntermaßen der Zusammenhang $U_{\eta I} = U_\eta \cdot cos(\varphi_\eta)$ und $U_{\eta Q} = U_\eta \cdot sin(\varphi_\eta)$ gilt und somit durch Amplitude $U_\eta$ und Phasenlage $\varphi_\eta$ die gleiche Information transportiert wird, wie durch die Gewichte $U_{\eta I}$ und $U_{\eta Q}$.

In diesem Fall beschreibt die Phasenlage einer Oberwelle ihre (zeitliche) Verschiebung zum Beginn einer Ansteuerperiode AP, indem sie beispielsweise die (zeitliche) Verschiebung des ersten Nulldurchgangs der Oberwelle in einer Ansteuerperiode AP zum Beginn der Ansteuerperiode AP beschreibt. Da sich in vielen Fällen die Amplitude $U_\eta$ und die Phasenlage $\varphi_\eta$ einer Signalkomponente direkter und einfacher ermitteln lassen als die vorgestellten Gewichte $U_{\eta L}$ und $U_{\eta Q}$, stellt die Verwendung von Amplitude $U_\eta$ und Phasenlage $\varphi_\eta$ eine weitere vorteilhafte Ausführung des erfindungsgemäßen Verfahrens dar. Allgemein formuliert wird zur Umsetzung des erfindungsgemäßen Verfahrens zumindest ein Schwingungsparameter eingesetzt, der das Schwingungsverhalten von zumindest einer Oberwelle der elektrischen Messgröße x beschreibt. Als Beschreibung des Schwingungsverhaltens wird dabei vor allem die Beschreibung von Frequenz und/oder Amplitude und/oder Phasenlage einer Oberwelle verstanden. In diesem Sinn kann ein geeigneter Schwingungsparameter noch auf viele weitere Arten umgesetzt werden, beispielsweise in Form einer komplexen Amplitude, wie sie aus der komplexen Wechselstromrechnung hinlänglich bekannt ist. Bei Verwendung einer komplexen Amplitude zur Beschreibung einer Oberwelle kann bereits ein einzelner Schwingungsparameter zur erfindungsgemäßen Beschreibung einer Oberwelle ausreichend sein.

Umgekehrt kann aus den Untertönen auch auf die Hilfsspannungen $u_0$, $u_1$, $u_2$ durch Lösung eines Gleichungssystems rückgerechnet werden. Da das System nur 3 Freiheitsgrade $u_0$, $u_1$, $u_2$ besitzt, sind dazu ebenso viele Spektralkomponenten, d.h. Amplituden bzw. Gewichte von Oberwellen, erforderlich. In einer besonders vorteilhaften Ausführung des erfindungsgemäßen Verfahrens wird in diesem Sinn der bijektive Zusammenhang

$$u_0, u_1, u_2 \leftrightarrow U_{1I}, U_{1Q}, U_{2I}$$

herangezogen, beispielsweise in Form eines Gleichungssystems bestehend aus den oben genannten Gleichungen, um zunächst dem obigen Zusammenhang entsprechende Schätzwerte $\hat{u}_0$, $\hat{u}_1$, $\hat{u}_2$ der Hilfsspannungen $u_0$, $u_1$, $u_2$ aus Schwingungsparametern wie $U_{1I}$, $U_{1Q}$, $U_{2I}$ zu ermitteln. An dieser Stelle sei wie bereits an früherer Stelle erwähnt, dass die konkrete Anzahl an Hilfskondensatoren und die damit einhergehende, konkrete Anzahl an Hilfsspannungen nicht ausschlaggebend ist für die Anwendbarkeit des erfindungsgemäßen Verfahrens. So müsste im Fall einer größeren Anzahl an Hilfskondensatoren lediglich eine dementsprechend größere Anzahl an Hilfsspannungen und eine dementsprechend größere Anzahl an Gewichten von Unterton-Amplituden herangezogen werden und der dargestellte Zusammenhang zwischen Hilfsspannungen und Oberwellen, also Untertönen und Grundton, an die gegebene Situation angepasst werden.

Die Schätzwerte $\hat{u}_0$, $\hat{u}_1$, $\hat{u}_2$ können anschließend mit für sie vorgesehenen Sollwerten $u_0^*$, $u_1^*$, $u_2^*$, die beispielsweise von einem Bediener oder einem überlagerten Regelkreis vorgegeben werden, verglichen werden. Als Sollwerte $u_0^*$, $u_1^*$, $u_2^*$ kann im gegenständlichen Fall insbesondere die vorgestellte Wahl $u_0^* = \frac{u}{4}$, $u_1^* = \frac{2u}{4}$, $u_2^* = \frac{3u}{4}$ vorteilhaft eingesetzt werden, wobei wie bereits erwähnt auch eine gegebenenfalls andere Wahl von Sollwerten keine Einschränkung der gegenständlichen Erfindung darstellt.

Abschließend können die aus diesem Vergleich hervorgehenden Abweichungen $e_0 = u_0^* - \hat{u}_0$, $e_1 = u_1^* - \hat{u}_1$, $e_2 = u_2^* - \hat{u}_2$ zwischen Soll- und Schätzwerten zur Einstellung der Korrekturpulsdauern der Ansteuerpulse herangezogen werden, wofür beispielsweise anhand einer Reglerübertragungsfunktion aus den ermittelten Abweichungen $e_0 = u_0^* - \hat{u}_0$, $e_1 = u_1^* - \hat{u}_1$, $e_2 = u_2^* - \hat{u}_2$ auf eine geeignete Reglerausgangsgröße gerechnet wird, die die Korrekturpulsdauern zur zukünftigen Ansteuerung der Halbleiterschalter beschreibt. Zur Durchführung dieses Schritts kann wiederum auf verschiedenste Vorgehensweisen aus der Regelungstechnik zurückgegriffen werden.

Eine prinzipbedingte Unterdrückung von Oberwellen, wie sie durch das erfindungsgemäße Verfahren ermöglicht wird, führt im praktischen Betrieb zu einer Reihe von signifikanten Vorteilen, insbesondere in Bezug auf den im Fall einer Netzeinspeisung üblicherweise vorzusehenden Ausgangsfilter AF. Im einfachsten Fall handelt es sich beim Ausgangsfilter AF um einen LCL-Tiefpass, dessen Grenzfrequenz zur Unterdrückung des Grundtons ausgelegt ist. Eine Verringerung der Grenzfrequenz auf die Untertöne würde unmittelbar mit einem erhöhten Material- und Platzbedarf des Filters einhergehen. Um die Untertöne unterdrücken zu können, wäre in vielen Fällen in einem Ausgangsfilter AF überdies ein ohmscher Widerstand notwendig, welcher den Wirkungsgrad des Umrichters 1 drastisch reduzieren würde und in weiterer Folge zusätzlichen Platzbedarf für eine entsprechende Kühlung erforderlich machen würde.

Ein weiterer ernstzunehmender Nachteil einer nicht ausreichenden Unterdrückung von Untertönen im Laststrom $i_L$ ist, dass diese eine unsymmetrische und/oder zeitlich veränderliche Belastung des Multilevel-Umrichters, welche eine mögliche Ursache für ein mangelndes Ladungsungleichgewicht darstellen kann, in vielen Fällen noch weiter verstärken kann. Das kann wiederum zu einer positiven Rückkopplung führen, in der die unsymmetrische Belastung des Multilevel-Umrichters 1 zu einer vergrößerten Ladungsimbalance führt und die vergrößerte Ladungsimbalance wiederum die Asymmetrie der Belastung erhöht. Damit kann das Verhalten des gesamten Multilevel-Umrichters 1 instabil bzw. chaotisch werden. Die kontrollierte Unterdrückung der Untertöne ist somit essentiell für den praktischen Einsatz von Multilevel-Umrichtern.

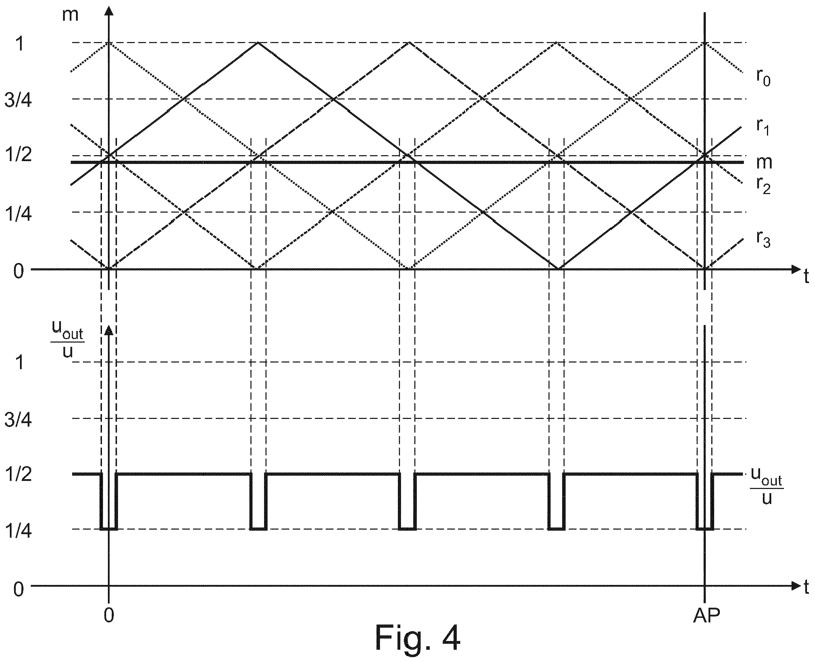

Eine Möglichkeit, wie die Pulsdauern $\tau_k$ der Ansteuerpulse zum Öffnen und Schließen der jeweiligen Halbleiterschalter $T_{k1}$, $T_{k2}$ konkret bestimmt werden können, um sie anschließend gemäß dem erfindungsgemäßen Verfahren zu modifizieren, ist in Fig. 4 gezeigt. In der gezeigten Ausführungsvariante wird dabei erneut vom Modulationsgrad $m$ Gebrauch gemacht wird, welcher wie vorhin für die Relation aus Soll-Ausgangsspannung $u_{out}^*$ und maximal darstellbarer Ausgangsspannung $u$ steht, d.h. $m = \frac{u_{out}^*}{u}$ . So kann insbesondere ein zu realisierender Sollwert $u_{out}^*$ durch den Modulationsgrad $m$ dargestellt werden. Die gezeigte Vorgehensweise kann bevorzugt wiederum in der Steuereinheit 2 umgesetzt werden.

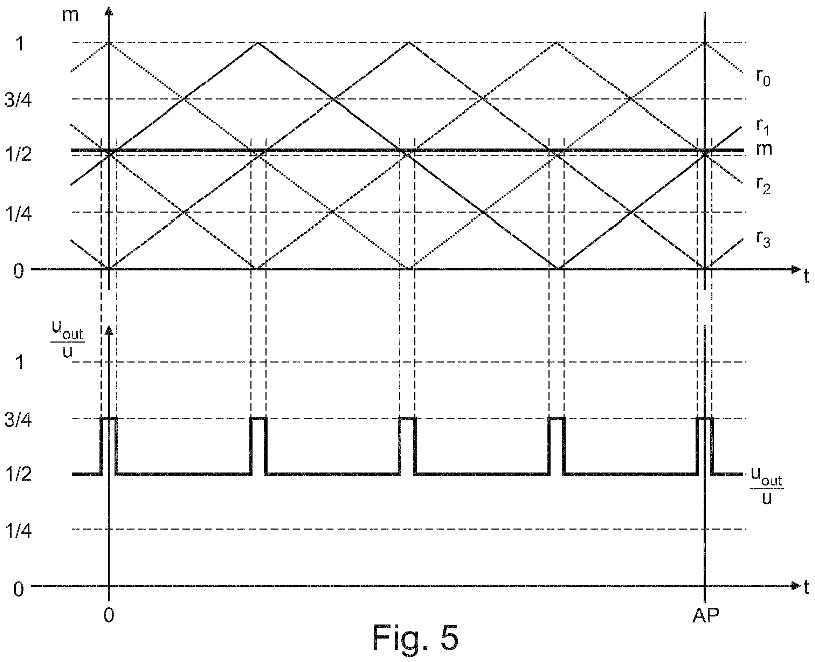

In Fig. 4 wird nun ein Vergleich von den jeweiligen Halbleiterschalten zugeordneten Vergleichssignalen $r_k$ mit dem Modulationsgrad $m$ vorgenommen, wobei ein Halbleiterschalter $T_{k1}$ hierbei angesteuert und damit geöffnet wird, wenn das ihm zugeordnete Vergleichssignal $r_k$, nachfolgend auch als "Wanderwelle" bezeichnet, größer als $m$ ist, und ansonsten geschlossen bleibt. Die jeweiligen Wanderwellen $r_k$ sind dabei so zueinander phasenverschoben, dass sich in den verschiedenen Wanderwellen $r_k$ idente Signalabschnitte in gleichmäßigen zeitlichen Abständen über eine Ansteuerperiode AP verteilen. Ein idealisierter Verlauf einer durch diese Vorgehensweise erzeugten Ausgangsspannung $u_{out}$ ist in der unteren Hälfte des Diagramms anhand des Signals $u_{out}$ gezeigt. Da im konkreten Beispiel die gewünschte Spannung knapp unter dem Spannungsniveau $\frac{u}{2}$ liegt, wechseln sich in der Ausgangsgröße die Spannungsniveaus $\frac{u}{2}$ und $\frac{u}{4}$ pulsweise ab. Was in einem Fall geschieht, in dem die gewünschte Ausgangsspannung knapp über einem verfügbaren Spannungsniveau liegt, ist demgegenüber in Fig. 5 gezeigt.

Die in diesem Fall leicht über dem Spannungsniveau $\frac{u}{2}$ gegebene Sollspannung verursacht konträr zur Situation aus Fig. 4 einen fortlaufenden Wechsel zwischen den Spannungsniveaus $\frac{u}{2}$ und $\frac{3u}{4}$ in der Ausgangsgröße.

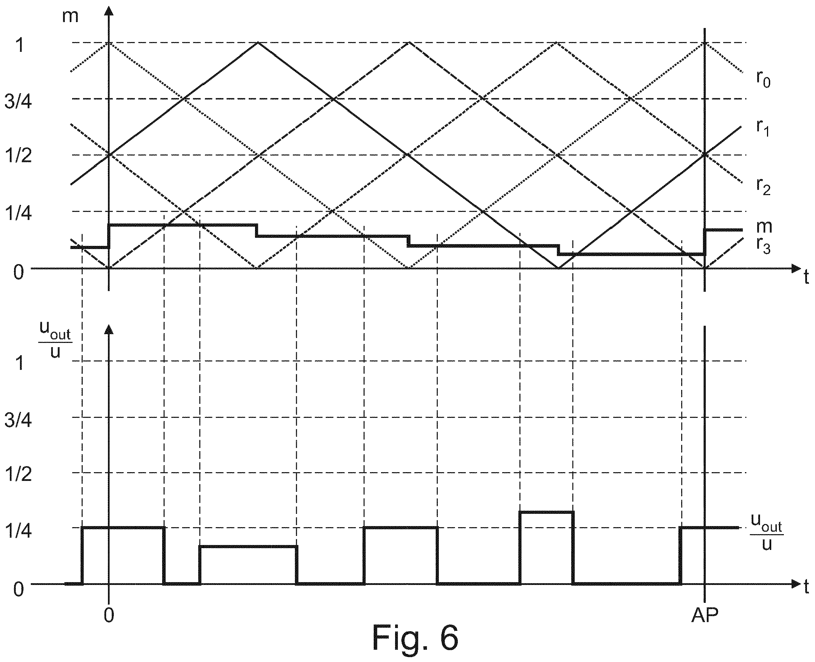

Das erfindungsgemäße Verfahren kann nun in einer vorteilhaften Weise von einer Änderung des Modulationsgrades $m$ innerhalb einer Ansteuerperiode AP Gebrauch machen, um die erfindungsgemäße Anpassung der Pulsdauern $\tau_k$ herbeizuführen. Wie ein derartiger Verlauf eines sich während einer Ansteuerperiode AP ändernden Modulationsgrades $m$ aussehen kann, ist in Fig. 6 gezeigt. Das Resultat sind Ausgangsspannungspulse mit verschiedenen Pulsdauern $\tau_k$, durch die dennoch die von einer üblicherweise überlagerten PWM geforderte Spannungs-Zeit-Fläche in der Ansteuerperiode AP erzeugt wird, gleichzeitig jedoch auch die erfindungsgemäße Balance der Hilfsspannungen $u_0$, $u_1$, $u_2$ erreicht wird. Zur Umsetzung eines sich innerhalb einer Ansteuerperiode AP ändernden Modulationsgrades $m$ kann wiederum auf mehrere Ansätze zurückgegriffen werden. So sind für diesen Zweck ein zeitlich variierender Modulationsgrad $m(t)$ oder $m[n]$ mit dem diskreten Zeitindex $n$ oder mehrere über jeweils eine Ansteuerperiode AP konstante Modulationsgrade $m_0$, $m_1$, $m_2$, $m_3$, die den Schalterpaaren $T_{k1}$, $T_{k2}$ zugeordnet sind, denkbar.

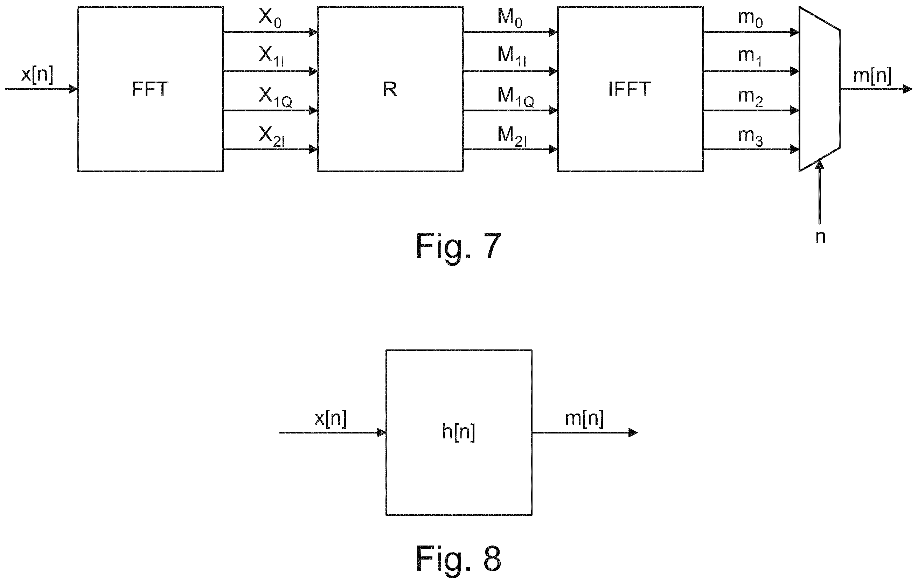

Fig. 7 zeigt weiters, wie das erfindungsgemäße Verfahren mittels eines Koppelplanes umgesetzt werden kann. Das Messsignal $x[n]$ steht hier vorzugsweise für die Ausgangsspannung $u_{out}$ bzw. den Ausgangsstrom $i_{out}$, gemessen zu durch den diskreten Zeitindex $n$ festgelegten Zeitpunkten $t_n$. Aus dem Messignal $x$ werden dabei anhand des Blocks FFT ("Fast-Fourier-Transformation") zunächst die Spektralkomponenten $X_0$, $X_{1I}$, $X_{1Q}$ sowie $X_{2I}$ als Schwingungsparameter ermittelt. Zentrales Element des Koppelplanes ist der in Fig. 7 als Block dargestellte Regeloperator R, welcher aus den Spektralkomponenten bzw. Schwingungsparametern $X_0$, $X_{1I}$, $X_{1Q}$, $X_{2I}$ des Messsignals die Spektralkomponenten $M_0$, $M_{1I}$, $M_{1Q}$, $M_{2I}$ des Modulationsgrades $m$ bestimmt. Dieser Regeloperator R kann im konkreten Fall ohne Einschränkung als $4 \times 4$ Matrix aufgefasst werden. In vielen Fällen ist es vorteilhaft, als Regeloperator R eine reine Diagonalmatrix anzusetzen. In diesem Fall lässt sich dieser beispielsweise durch ein LTI (Mehrgrößen-)System darstellen, wodurch eine effiziente Implementierung vorzugsweise in Form eines diskreten, linearen und vielfach überdies zeitinvarianten Filters möglich wird.

Im in Fig. 7 gezeigten Fall werden mittels des Blocks IFFT, der für eine vektorwertige, inverse Fouriertransformation steht, die individuellen Modulationsgrade $m_0$, $m_1$, $m_2$, $m_3$ ermittelt. Diese individuellen Modulationsgrade $m_0$, $m_1$, $m_2$, $m_3$ werden, wie durch den Multiplexerblock in Fig. 7 dargestellt, in einem weiteren Schritt in einen sich zeitlich ändernden Modulationsgrad $m[n]$ umgewandelt.

In einer weiteren vorteilhaften Ausführung des erfindungsgemäßen Verfahrens kann ein mittlerer Modulationsgrad $\overline{m}$ vorgegeben werden, der dafür Sorge trägt, dass der Gleichanteil $X_0$ einem Sollwert, beispielsweise $u_{out}^*$ , folgt.

Anhand der beschriebenen Erfindung kann ein derartiger mittlerer Modulationsgrad $\overline{m}$ anhand von individuellen Modulationsgraden $m_0$, $m_1$, $m_2$, $m_3$ in einem weiteren Schritt stückweise variiert werden und in weiterer Folge anhand eines sich zeitlich ändernden Verlaufes des Modulationsgrades $m[n]$ dargestellt werden, wie beispielsweise in Fig. 6 gezeigt. Wie erwähnt können aus einem Vergleich eines derartigen zeitlichen Verlaufes des Modulationsgrades $m[n]$ mit einer oder mehrerer Wanderwellen $r_k$ die gesuchten Korrekturpulsdauern $\tau_k^*$ ermittelt werden, die die Hilfskondensatoren und damit die an ihnen abfallenden Hilfsspannungen in Balance halten.

Die Blöcke FFT, Regeloperator R und IFFT können in einer bevorzugten Ausführungsform auch konzentriert zu einem Block zusammengefasst werden, was in Fig. 8 dargestellt ist. Der mittlere Block ist dabei durch die Impulsantwort $h[n]$ charakterisiert und fasst die genannten Blöcke FFT, Regeloperator R und IFFT zusammen. Die zuvor in den separaten Blöcken durchgeführten Schritte können so beispielsweise mittels der aus der Regelungstechnik hinlänglich bekannten mathematischen Operation der Faltung durchgeführt werden, wobei das Messignal $x[n]$ mit der Impulsantwort $h[n]$ gefaltet wird, wodurch wiederum ein zeitlicher Verlauf eines Modulationsgrades $m[n]$ ermittelt werden kann, aus dem wie in Fig. 4, Fig. 5 und Fig. 6 gezeigt durch einen Vergleich mit Wanderwellen $r_k$ die letztlich gesuchten Korrekturpulsdauern $\tau_k^*$ ermittelt werden können. Diese Herangehensweise ermöglicht, dass die zumindest eine Korrekturpulsdauer $\tau_k^*$ aus der elektrischen Messgröße $x$ anhand einer Faltungsoperation ermittelt wird, bei der die elektrische Messgröße $x$ mit einer aus dem zumindest einen Schwingungsparameter abgeleiteten Impulsantwort gefaltet wird. Die Impulsantwort kann dabei bevorzugt aus einem Schwingungsparameter, welcher Information über die Frequenz der von ihm beschriebenen Oberwelle beinhaltet, abgeleitet werden, indem die genannte Impulsantwort so gewählt wird, dass die Schleifenverstärkung der Schleife von Korrekturpulsdauer $\tau_k^*$ auf Messgröße $x$ und zurück auf Korrekturpulsdauer $\tau_k^*$ eine Polstelle, das heißt eine sehr große Verstärkung, zumindest aber eine Verstärkung größer als eins, bei der Frequenz der vom Schwingungsparameter beschriebenen Oberwelle annimmt. In einer vorteilhaften Ausgestaltung werden zur Unterdrückung mehrerer Oberwellen mehrere, an den Frequenzen dieser mehreren Oberwellen liegende Polstellen in die oben genannte Schleife eingebracht. Zum Entwurf der Impulsantwort auf Basis eines oder mehrerer Schwingungsparameter können auch verschiedene Ansätze aus der Regelungstechnik eingesetzt werden, wie H-Unendlich-Regelung, Repetitive-Control oder andere auf Optimierung basierende Reglerentwurfsverfahren. Bevorzugt wird eine derartige Impulsantwort, die unter anderem auch als z-Übertragungsfunktion oder als digitales Filter implementiert werden kann, vor Betriebsbeginn des Multilevel-Umrichters entworfen und im Betrieb nicht mehr geändert. In gewissen Fällen kann es jedoch auch vorteilhaft sein, eine solche Impulsantwort im Betrieb zu adaptieren und sie beispielsweise an sich ändernde Schwingungsparameter anzupassen.

Ein Koppelplan zur Umsetzung des erfindungsgemäßen Verfahrens, wie er in Fig. 7 oder Fig. 8 gezeigt ist, kann dabei bevorzugt auf der Steuereinheit 2 implementiert werden, welche die erfindungsgemäßen Messdaten der Messgröße $x$ aufnimmt, die dem Koppelplan entsprechenden Berechnungen ausführt und die gewünschten, angepassten Korrekturpulsdauern $\tau_k^*$ ausgibt, gegebenenfalls auf Basis eines zuvor berechneten Verlaufs eines Modulationsgrades $m[n]$, so wie in Fig. 4, Fig. 5 und Fig. 6 gezeigt. Unter der Annahme, dass am Ausgang des Multilevel-Umrichters 1 ein lineares Ausgangsfilter AF (LTI-System, beispielsweise in Form eines LCL-Filters) angeschlossen ist, sind die Untertöne von Spannungen und Strömen, die in das Ausgangsfilter AF eingehen oder dieses verlassen, stets durch eine komplexwertige, sogenannte Untertonimpedanz miteinander verknüpft. Die Rückwirkung der Last $Z_L$ auf die Untertonimpedanzen ist dabei in den meisten für die Praxis relevanten Fällen vernachlässigbar, weshalb es unerheblich ist, ob messtechnisch eine Spannung oder ein Strom am Ein- oder Ausgang des Ausgangsfilters AF zur Durchführung des erfindungsgemäßen Verfahrens erfasst wird. Entscheidend ist, dass die Stelle, an der gemessen wird, elektrisch mit dem Ausgang verbunden ist. Denkbar ist auch eine Linearkombination mehrerer Messgrößen, was insbesondere hinsichtlich des Signal-to-Noise-Ratio ("SNR") Vorteile bringen kann.

**Patentansprüche**

1. Verfahren zum Betrieb eines Multilevel-Umrichters in Flycap-Topologie (1), bei dem zumindest zwei Halbleiterschalter innerhalb einer mit einer Ansteuerfrequenz $f_A$ wiederkehrenden Ansteuerperiode (AP) durch Ansteuerpulse variabler Pulsdauern $\tau_k$ angesteuert werden, um zur Erzeugung einer Ausgangsspannung ($u_{out}$) des Multilevel-Umrichters (1) eine an einem Eingang (E) des Multilevel-Umrichters (1) angeschlossene Spannungsquelle (S), einen Ausgang (A) des Multilevel-Umrichters (1) und zumindest einen zwischen Eingang (E) und Ausgang (A) des Multilevel-Umrichters (1) angeordneten Hilfskondensator $C_j$ selektiv miteinander zu verbinden, wobei sich am zu-

mindest einen Hilfskondensator $C_j$ eine Hilfsspannung $u_j$ ausbildet und wobei an einer mit dem Ausgang (A) des Multilevel-Umrichters (1) elektrisch verbundenen Stelle zumindest eine elektrische Spannung oder zumindest ein elektrischer Strom als elektrische Messgröße ($x$) gemessen werden, **dadurch gekennzeichnet, dass** unter Verwendung zumindest eines aus der elektrischen Messgröße ($x$) abgeleiteten Schwingungsparameters, der das Schwingungsverhalten von zumindest einer Oberwelle der elektrischen Messgröße ($x$) beschreibt, wobei die Frequenz der Oberwelle einem ganzzahligen Vielfachen der Ansteuerfrequenz $f_A$ entspricht, zumindest eine Korrekturpulsdauer $\tau_k^*$ für einen zukünftigen Ansteuerpuls zur Verkleinerung der Amplitude der zumindest einen Oberwelle ermittelt wird **und dass** zumindest ein Halbleiterschalter mit einem Ansteuerpuls der ermittelten Korrekturpulsdauer $\tau_k^*$ angesteuert wird.

2. Verfahren nach Anspruch 1, **dadurch gekennzeichnet, dass** zur Ermittlung der zumindest einen Korrekturpulsdauer $\tau_k^*$ aus dem zumindest einen Schwingungsparameter zumindest ein Schätzwert $\hat{u}_j$ einer am zumindest einen Hilfskondensator $C_j$ abfallenden Hilfsspannung $u_j$ ermittelt wird, **dass** die Abweichung $e_j$ zwischen dem Schätzwert $\hat{u}_j$ und einem Sollwert $u_j^*$, welcher für die vom zumindest einen Schätzwert $\hat{u}_j$ beschriebene Hilfsspannung $u_j$ vorgegeben wird, ermittelt wird **und dass** die ermittelte Abweichung $e_j$ zur Ermittlung der zumindest einen Korrekturpulsdauer $\tau_k^*$ herangezogen wird.

3. Verfahren nach Anspruch 2, **dadurch gekennzeichnet, dass** der zumindest eine Schätzwert $\hat{u}_j$ einer am zumindest einen Hilfskondensator $C_j$ abfallenden Hilfsspannung $u_j$ durch Lösung eines Gleichungssystems ermittelt wird, in dem der zumindest eine Schwingungsparameter als bekannte Größe berücksichtigt wird.

4. Verfahren nach Anspruch 2 oder 3, **dadurch gekennzeichnet, dass** die Ermittlung der zumindest einen Korrekturpulsdauer $\tau_k^*$ anhand der Abweichung $e_j$ zwischen dem zumindest einen Schätzwert $\hat{u}_j$ und dem Sollwert $u_j^*$, welcher für die vom zumindest einen Schätzwert $\hat{u}_j$ beschriebene Hilfsspannung $u_j$ vorgegeben wird, mittels eines Regeloperators (R) erfolgt, der die ermittelte Abweichung $e_j$ auf eine Reglerausgangsgröße abbildet, **dass** aus der Reglerausgangsgröße zumindest eine Korrekturpulsdauer $\tau_k^*$ ermittelt wird, die zumindest einem im Multilevel-Umrichter (1) vorgesehenen Halbleiterschalter zugeordnet ist, **und dass** die ermittelte Korrekturpulsdauer $\tau_k^*$ in einem zukünftigen Verfahrensschritt herangezogen wird, um den zumindest einen Halbleiterschalter anzusteuern.

5. Verfahren nach Anspruch 1, **dadurch gekennzeichnet, dass** die zumindest eine Korrekturpulsdauer $\tau_k^*$ aus der elektrischen Messgröße ($x$) anhand einer Faltungsoperation ermittelt wird, bei der die elektrische Messgröße ($x$) mit einer aus dem zumindest einen Schwingungsparameter abgeleiteten Impulsantwort gefaltet wird.

6. Verfahren nach einem der vorhergehenden Ansprüche, **dadurch gekennzeichnet, dass** die Frequenz und/oder die Amplitude und/oder die Phasenlage der zumindest einen Oberwelle der elektrischen Messgröße ($x$) als Schwingungsparameter zur Beschreibung des Schwingungsverhaltens der zumindest einen Oberwelle der elektrischen Messgröße ($x$) ermittelt werden, wobei die Phasenlage der Oberwelle ihre zeitliche Verschiebung zum Beginn einer Ansteuerperiode (AP) beschreibt.

7. Verfahren nach einem der vorhergehenden Ansprüche, **dadurch gekennzeichnet, dass** die Frequenz und/oder entsprechend einem IQ-Verfahren zwei Amplituden von zwei um 90 Grad zueinander phasenverschobenen Signalkomponenten der zumindest einen Oberwelle der elektrischen Messgröße ($x$) als Schwingungsparameter zur Beschreibung des Schwingungsverhaltens der zumindest einen Oberwelle der elektrischen Messgröße ($x$) ermittelt werden.

8. Multilevel-Umrichter in Flycap-Topologie (1) mit einer Steuereinheit (2), bei dem zur Erzeugung einer Ausgangsspannung ($u_{out}$) des Multilevel-Umrichters (1) eine mit einem Eingang (E) des Multilevel-Umrichters (1) verbundene Spannungsquelle (S), der Ausgang (A) des Multilevel-Umrichters (1) und zumindest ein zwischen Eingang (E) und Ausgang (A) des Multilevel-Umrichters (1) angeordneter Hilfskondensator ($C_j$) selektiv miteinander verbunden wer-

den, wofür zumindest zwei Halbleiterschalter vorgesehen sind, welche ausgestaltet sind, innerhalb einer mit einer Ansteuerfrequenz ($f_A$) wiederkehrenden Ansteuerperiode (AP) durch Ansteuerpulse variabler Pulsdauern ($\tau_k$) angesteuert zu werden und am zumindest einen Hilfskondensator ($C_j$) eine Hilfsspannung ($u_j$) auszubilden, und wobei der Multilevel-Umrichters (1) ausgestaltet ist, an einer mit dem Ausgang (A) des Multilevel-Umrichters (1) elektrisch verbundenen Stelle zumindest eine elektrische Spannung oder zumindest ein elektrischer Strom als elektrische Messgröße (x) zu erfassen, **dadurch gekennzeichnet, dass** die Steuereinheit (2) des Multilevel-Umrichters (1) ausgestaltet ist, unter Verwendung zumindest eines aus der elektrischen Messgröße (x) abgeleiteten Schwingungsparameters, der das Schwingungsverhalten von zumindest einer Oberwelle der elektrischen Messgröße (x) beschreibt, wobei die Frequenz der Oberwelle einem ganzzahligen Vielfachen der Ansteuerfrequenz ($f_A$) entspricht, zumindest eine Korrekturpulsdauer $\left(\tau_k^*\right)$ für einen zukünftigen Ansteuerpuls zur Verkleinerung der Amplitude der zumindest einen Oberwelle zu ermitteln und zumindest einen Halbleiterschalter mit dem zumindest einen Ansteuerpuls mit der ermittelten Korrekturpulsdauer $\left(\tau_k^*\right)$ anzusteuern.

Fig. 1

EP 4 106 176 A1

Fig. 2

Fig. 3

Fig. 4

Fig. 5

Fig. 6

Fig. 7

Fig. 8

EP 4 106 176 A1

Europäisches
Patentamt

European
Patent Office

Office européen
des brevets

# EUROPÄISCHER RECHERCHENBERICHT

Nummer der Anmeldung

**EP 22 17 9082**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | BENSAID R ET AL: "Floating voltages estimation in three-cell converters using a discrete-time kalman filter", 32ND.ANNUAL IEEE POWER ELECTRONICS SPECIALISTS CONFERENCE. PESC 2001. CONFERENCE PROCEEDINGS. VANCOUVER, CANADA, JUNE 17 - 21, 2001; [ANNUAL POWER ELECTRONICS SPECIALISTS CONFERENCE], NEW YORK, NY : IEEE, US, Bd. 1, 17. Juni 2001 (2001-06-17), Seiten 327-332, XP010559169, DOI: 10.1109/PESC.2001.954041 ISBN: 978-0-7803-7067-8 * Abbildungen 1,5,6 * * Seite 327 - Seite 331 * ----- | 1-8 | INV. H02M7/483 ADD. H02M1/12 |
| X | G. GATEAU ET AL: "Multicell converters: active control and observation of flying-capacitor voltages", IEEE TRANSACTIONS ON INDUSTRIAL ELECTRONICS, Bd. 49, Nr. 5, 1. Oktober 2002 (2002-10-01), Seiten 998-1008, XP055289498, USA ISSN: 0278-0046, DOI: 10.1109/TIE.2002.803200 * Abbildungen 1,4-16 * * Kapitel IV * ----- -/-- | 1-8 | RECHERCHIERTE SACHGEBIETE (IPC) H02M |

Der vorliegende Recherchenbericht wurde für alle Patentansprüche erstellt

| Recherchenort | Abschlußdatum der Recherche | Prüfer |
|---|---|---|
| Den Haag | 14. Oktober 2022 | Kail, Maximilian |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

Europäisches
Patentamt

European
Patent Office

Office européen
des brevets

**EUROPÄISCHER RECHERCHENBERICHT**

Nummer der Anmeldung

EP 22 17 9082

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | HOSSEINI S H ET AL: "Estimation of flying capacitors voltages in multicell converters", ELECTRICAL ENGINEERING/ELECTRONICS, COMPUTER, TELECOMMUNICATIONS AND INFORMATION TECHNOLOGY, 2009. ECTI-CON 2009. 6TH INTERNATIONAL CONFERENCE ON, IEEE, PISCATAWAY, NJ, USA, 6. Mai 2009 (2009-05-06), Seiten 110-113, XP031480957, ISBN: 978-1-4244-3387-2 ----- | 1-8 | |

RECHERCHIERTE
SACHGEBIETE (IPC)

Der vorliegende Recherchenbericht wurde für alle Patentansprüche erstellt

| Recherchenort | Abschlußdatum der Recherche | Prüfer |
|---|---|---|
| Den Haag | 14. Oktober 2022 | Kail, Maximilian |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument
...............................................................................................
& : Mitglied der gleichen Patentfamilie, übereinstimmendes
   Dokument

EPO FORM 1503 03.82 (P04C03)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20170214309 A